# EUROPÄISCHE PATENTSCHRIFT

(11) **EP 3 992 028 B1**
(45) Veröffentlichungstag und Bekanntmachung des Hinweises auf die Patenterteilung: **08.07.2026**
(21) Anmeldenummer: 21204107.3
(22) Anmeldetag: 22.10.2021
(51) Int. Cl.: B60P 1/54, A01B 59/06

(54) **SYSTEM UND VERFAHREN ZUR KOPPLUNG EINES ARBEITSGERÄTS AN EINEM FAHRZEUG**
SYSTEM AND METHOD FOR COUPLING AN IMPLEMENT TO A VEHICLE
SYSTÈME ET MÉTHODE D'ACCOUPLEMENT D'UN OUTIL À UN VÉHICULE

(30) Priorität: 03.11.2020 DE 102020128972
(43) Veröffentlichungstag der Anmeldung: 04.05.2022
(73) Patentinhaber: Anton Fischbacher e.K., 83131 Nußdorf am Inn (DE); Schaefer Stahl- und Fahrzeugbau GmbH, 83543 Rott am Inn (DE)
(72) Erfinder: Bader, Anton, 83131 Nußdorf am Inn (DE); Schaefer, Sebastian, 83043 Bad Aibling (DE)
(74) Vertreter: Beckord & Niedlich Patentanwälte PartG mbB

(56) Entgegenhaltungen:
- WO-A1-90/10554
- DE-U1- 29 807 347
- SE-B- 463 301

## Beschreibung

Die Erfindung betrifft ein System und ein Verfahren zur Kopplung eines Arbeitsgeräts an einem Fahrzeug, insbesondere an einem Lastkraftwagen ("LKW"). Die Erfindung befasst sich dabei sowohl mit der Ankopplung des Arbeitsgeräts an dem Fahrzeug als auch mit der Abkopplung des Arbeitsgeräts von dem Fahrzeug. Auch das sichere Halten des Arbeitsgeräts am Fahrzeug ist damit gemeint. Insbesondere betrifft die Erfindung eine koppelbare Konsole für Ladekrane oder andere Arbeitsgeräte, die sicher und schnell an- und abgekoppelt werden kann oder Fahrzeuge, die solch eine Koppelmöglichkeit bieten.

Es ist bekannt, Arbeitsgeräte auf Konsolen zu montieren und diese Konsolen an das Heck eines LKW anzubringen. Zur Anbringung ist in der Regel am hinteren Fahrgestellende eine Platte vorgesehen, mit der die Konsole verschraubt oder verbolzt wird. Oftmals wird die Konsole von oben in Halterungen der Platte eingehängt und an der Unterseite mittels bolzen oder Schrauben befestigt.

WO 90/10554 bezieht sich auf eine Anordnung in Transportfahrzeugen mit Kränen, wobei das Fahrzeug ein Fahrgestell mit Mitteln zur lösbaren Verbindung desselben mit einer separaten Basis aufweist, die den Kran trägt. Der Sockel ist mit Stützen versehen, die ein Aufstellen des Krans mit Abstand zum Fahrzeug ermöglichen, sowie Hydraulikleitungen, die am Fahrzeug bzw. am Kransockel angeordnet sind und für den Betrieb erforderlich sind. Der Kran ist durch Kupplungsmittel verbindbar. Die Kopplungsmittel bestehen aus männlichen und weiblichen Elementen, die fest am Fahrzeug bzw. an der Kranbasis montiert sind und parallel zur Längsrichtung des Fahrzeugchassis verlaufen und so die Verbindung der beiden Leitungssätze miteinander ermöglichen, während gleichzeitig das Chassis und die Basis miteinander verbunden sind.

DE 29807347 U1 beschreibt eine Anordnung zur Befestigung von Zusatzgeräten an kleineren Lastkraftfahrzeugen. Diese Anordnung umfasst ein Aufnahmeelement, welches fest mit dem Fahrzeuggrundrahmen verbunden ist und ein Befestigungselement, dass mit dem Zusatzgerät verbunden ist. Das Aufnahmeelement besteht aus einer Montageplatte, zwei dazu rechtwinklig angeordneten Tragplatten und einem die Tragplatten verbindenden Halteelement. das dazu korrespondierende Befestigungselement besteht aus einem sich senkrecht erstreckenden, mit dem Zusatzgerät verbundenen Tragschenkel, der oben durch einen sich in Richtung Fahrzeuggrundrahmen erstreckenden Steg mit einer nach unten gerichteten Hakenzunge mit überwiegend rechteckigem Querschnitt. Im unteren Bereich der Tragplatten und des Tragschenkels sind korrespondierende Öffnungen angeordnet, wobei ein Arretierungsbolzen vorhanden ist, der mit den dessen Querschnitt dem dieser Öffnungen entspricht, so dass der Arretierungsbolzen im montierten Zustand durch die Öffnungen gesteckt werden kann.

Das Lösen bzw. Anziehen von Schrauben ist dabei sehr kraft- und zeitaufwendig und bedarf zumindest eines Werkzeugs. Bolzen müssen zwar nicht verschraubt werden, können jedoch verklemmen, zumindest wenn sie Kräfte der Verbindung aufnahmen müssen.

Was ein Einhängen betrifft, ist dies zuweilen nicht in geschlossenen Hallen möglich, da deren Bauhöhe zu niedrig ist, z.B. ist die Innenraumhöhe von vielen Fahrzeughallen nicht ausreichend, um einen Kran von oben in eine Halterung an einem Fahrzeug einzuhängen.

Zudem werden Krane oftmals auf ihren Stützen ggf. mit Zuhilfenahme des Kranarms als dritten Punkt aufgestellt. Dies hat den Nachteil, dass man zur Anbringung mit einem LKW rückwärts an den Kran heranfahren muss, was zum einen großes Geschick erfordert und zum anderen durch das Risiko einer Kollision auch gefährlich für Menschen in der Umgebung sein kann. Zudem kann es passieren, dass ein Kran, der auf seiner eigenen Hydraulik abgestellt wird, durch Temperaturunterschiede und eine damit einhergehende Änderung des Drucks oder Auslenkung der Hydraulik in einen von außen betrachtet undefinierten Zustand geraten kann. Beispielsweise kann er sich neigen oder Druckspannungen in seiner Hydraulik aufbauen. Dies kann zu zusätzlichen Schwierigkeiten oder Gefahren führen.

Letztlich weisen einige Schnellwechselsysteme den Nachteil auf, dass ein angebrachtes Arbeitsgerät mit der Zeit an Spiel gewinnt und dadurch beginnt zu wackeln, was sowohl Nachteilhaft für Arbeiten mit diesem Arbeitsgerät als auch für die Arbeitssicherheit ist.

Es ist eine Aufgabe der vorliegenden Erfindung, Nachteile des Standes der Technik zu überwinden und ein System, Vorrichtungen und Verfahren anzugeben, mit dem eine sichere Kopplung eines Arbeitsgeräts erreicht wird, eine schnelle An- und Abkopplung möglich ist und zudem bevorzugt ein sicherer Halt und insbesondere auch eine vorteilhafte Lagerung gewährleistet wird. Insbesondere ist ein werkzeugfreies An- und Abkoppeln eine Aufgabe dieser Erfindung.

Diese Aufgabe wird durch ein System gemäß Anspruch 1, eine Lagervorrichtung gemäß Anspruch 8, einen Geräteträger gemäß Anspruch 11, eine Adaptereinheit gemäß Anspruch 12, ein Fahrzeug gemäß Anspruch 13, ein Ankoppelverfahren gemäß Anspruch 14, und ein Abkoppelverfahren gemäß Patentanspruch 15 gelöst.

Ein erfindungsgemäßes System dient zur Kopplung eines Arbeitsgeräts an einem (Land-) Fahrzeug, insbesondere einem Lastkraftwagen oder einer selbstfahrenden Geländezugmaschine z.B. einem Traktor oder einem Unimog.

Arbeitsgeräte sind dem Fachmann bekannt und umfassen Grunde alle Arbeitsgeräte, die an einem Fahrzeug angebracht werden können. Die Erfindung ist besonders vorteilhaft für Arbeitsgeräte, die so schwer sind, dass sie ein Mensch sie nicht mehr zu heben vermag. Ein bevorzugtes Arbeitsgerät ist ein Kran, ein Erdbohrer, ein Heckkraftheber. Im Allgemeinen dient die Erfindung dazu, ein System bereitzustellen, dass als universelle Schnittstelle für alle möglichen Arbeitsgeräte zur lösbaren Kopplung an besagtem Fahrzeug dienern kann. Der besondere Vorteil ist, dass ein Fahrzeug nicht fix mit einem Arbeitsgerät ausgestattet sein muss, sondern für mannigfaltige Aufgaben mit und ohne Arbeitsgerät verwendet werden kann und sogar zwischen mehreren Arbeitsgeräten wechseln kann.

Das System umfasst eine Adaptereinheit (eine "Halterung" am Fahrzeug), ausgelegt zur festen Anbringung am Heck und/oder an der Front des Fahrzeugs und einen Geräteträger ("Konsole" für Arbeitsgeräte) ausgelegt zum Fixieren und Tragen eines Arbeitsgeräts. Zusätzlich umfasst das System noch einen Verriegelungsmechanismus zu einem Verriegeln von Geräteträger und Adaptereinheit. Es ist dabei selbstverständlich, dass der Geräteträger mit Mitteln zum Befestigen eines Arbeitsgeräts ausgestattet sein kann, z.B. mit Löchern, in denen Schrauben das Arbeitsgerät halten können oder Bolzen/Schrauben, auf die das Arbeitsgerät aufgesteckt und daran befestigt werden kann. Jedoch ist auch ein Anschweißen des Arbeitsgeräts auf den Geräteträger möglich. Die Adaptereinheit kann insbesondere Adapterplatte umfassen, welche so angeordnet sind, dass sie vom Fahrzeug fort ragen.

Das System ist dabei so ausgeformt, dass der Geräteträger durch Herankippen um eine Drehachse im unteren Bereich der Adaptereinheit und/oder durch horizontales Einschieben und/oder Einschieben von unten nach oben in eine Koppelposition mit der Adaptereinheit gebracht werden kann. Es findet also insbesondere kein Einhängen von oben statt, was bei hohen Arbeitsgeräten wie z.B. Kränen in einer niedrigen Halle problematisch ist. Die Drehachse muss nicht unbedingt eine physische Achse sein, sondern kann auch eine theoretische Linie sein, um die herum gedreht wird. Das Einschieben von unten nach oben ist besonders vorteilhaft als Vorbereitung für ein Herankippen des Geräteträgers. Ein verkippter Geräteträger kann zunächst mit einer Ausformung (z.B. einem Drehbolzen) im unteren Bereich von unten nach oben in eine Positionierungshilfe im unteren Bereich der Adaptereinheit eingeschoben werden, was eine horizontale Positionierung sehr erleichtert. Daraufhin kann der Geräteträger um die Drehachse in der Positionierungshilfe herum an die Adaptereinheit herangekippt werden.

Des Weiteren weist die Adaptereinheit eine erste Kopplungsstruktur und der Geräteträger eine zweite Kopplungsstruktur auf, wobei diese Kopplungsstrukturen so ausgeformt sind, dass sie in der Koppelposition von Adaptereinheit und Geräteträger dermaßen ineinandergreifen, dass durch einen formschlüssigen ersten Anschlag der Kopplungsstrukturen aneinander zumindest eine relative vertikale Verschiebung des Geräteträgers zur Adaptereinheit nach oben blockiert wird. Mit "Anschlag" ist hier eine Ausformung gemeint, mit der der Geräteträger in der Koppelposition von unten an eine Struktur der Adaptereinheit anstößt, so dass über diesen Anstoß hinaus keine weitere Bewegung des Geräteträgers relativ zur Adaptereinheit in der Koppelposition möglich ist. Der Geräteträger muss also mit einem Element unter eine Struktur der Adaptereinheit "untergeschoben" werden.

Beispielsweise weist der Geräteträger eine vorspringende Struktur auf die in der Koppelposition von unten gegen eine Einbuchtung der Adaptereinheit stößt, oder die Adaptereinheit weist einen Vorsprung auf, gegen den der untere Rand einer Einbuchtung des Geräteträgers stößt. Dieser Anschlag liegt bevorzugt in einem oberen Bereich des Geräteträgers (oberhalb der Mitte), während eine Drehachse zum Herankippen bevorzugt im unteren Bereich (unterhalb der Mitte) des Geräteträgers liegt.

Es wird darauf hingewiesen, dass der Geräteträger in der Koppelposition in der Regel nach vorne oder nach hinten aus dem Fahrzeug herausragt. Es ist daher bevorzugt, den Geräteträger mit einer Stoßstange und/oder Beleuchtungselementen auszustatten und/oder ggf. einer Anhängerkupplung. Eine elektrische Verbindung für Beleuchtungselemente kann mittels einer Steckverbindung auf einfache Weise erreicht werden.

Die Kopplungsstrukturen können separate Strukturen sein, die an die Adaptereinheit bzw. den Geräteträger fest angebracht worden sind, z.B. geschraubt oder geschweißt. Sie können aber auch Ausformungen von Bereichen der Adaptereinheit bzw. des Geräteträgers sein, die der jeweils anderen Kopplungsstruktur zugewandt sind. Beispielsweise sind die Enden von Adapterplatte der Adaptereinheit als Kopplungsstrukturen ausgeformt.

Besagter Verriegelungsmechanismus umfasst bewegliche Verriegelungselemente, z.B. Verriegelungsbolzen, welche in eine Schließposition und in eine Entnahmeposition bewegt werden können und in der Schließposition den Geräteträger an der Adaptereinheit fixieren und in der Entnahmeposition von der Adaptereinheit freigeben. Die Bewegung der Verriegelungselemente ist bevorzugt eine laterale Verschiebung, kann jedoch auch je nach Form der Verriegelungselemente eine Drehung beinhalten. Beispielsweise werden Verriegelungsbolzen mittels Hydraulikzylindern verschoben. In der Schließposition greifen die Verriegelungselemente dermaßen in Adaptereinheit und Geräteträger ein (z.B. in Löcher), dass diese aneinander fixiert und bevorzugt auch miteinander verspannt werden. In der Entnahmeposition ist diese Fixierung gelöst, so dass Adaptereinheit und Geräteträger voneinander getrennt werden können. Es ist bevorzugt, dass der Verriegelungsmechanismus vom Fahrzeug aus mit Energie versorgt wird, z.B. mit Strom oder Öldruck für eine Hydraulik. Dabei ist insbesondere bevorzugt, dass eine Verbindung von dem Geräteträger zum Fahrzeug mittels Steckverbindungen schnell getrennt bzw. verbunden werden kann.

Zusammen mit dem formschlüssigen Anschlag von unten hat eine solche Verriegelung den Vorteil, dass Kräfte des Arbeitsgeräts gut aufgefangen und in einen Fahrzeugrahmen geleitet werden können.

Es wird darauf hingewiesen, dass bei der Erfindung die Verriegelungselemente nicht die gesamte Last der Kopplung aufnehmen, sondern durch die formschlüssigen Anschläge ebenfalls Last aufgenommen wird. Die Bolzen pressen die Adaptereinheit und den Geräteträger an deren Kopplungsstrukturen aneinander, wodurch die entstehenden Kräfte auf beide Komponenten Verriegelungselemente und Kopplungsstrukturen aufgeteilt werden. Reine Zugkräfte nach hinten, z.B. wenn eine Anhängerkupplung an den Geräteträger angebracht und ein Anhänger angehängt ist, könnten jedoch komplett von den Verriegelungselementen aufgenommen werden, zumindest wenn der Geräteträger zur Kopplung nur horizontal herangeschoben werden musste.

Es wird darauf hingewiesen, dass Bezeichnungen wie "hinten" oder "vorne" sich jeweils auf die bestimmungsgemäße Kopplung am Fahrzeug beziehen. Mit "Hinten" ist stets die fahrzeugabgewandte Seite und mit "vorne" die fahrzeugzugewandte Seite gemeint. Bei einer Verkippung ist die Oberseite des verkippten Elements relevant. eine Verkippung "nach hinten" bedeutet, dass die Oberseite nach hinten verkippt ist. Bei einer Verkippung "nach vorne" bewegt sich die Oberseite auf das Fahrzeug zu. Bei einer Kopplung am Heck eines Fahrzeugs kann das Koordinatensystem des Fahrzeugs bezüglich "hinten" und "vorne" verwendet werden. Bei einer Anbringung an der Front ist es genau umgekehrt.

Das erfindungsgemäße System ist sehr vorteilhaft mit einer besonderen Lagervorrichtung einsetzbar, die eine besonders einfache Kopplung und zudem ein Lagern des Arbeitsgerätes erlaubt. Eine solche Lagervorrichtung könnte auch eine eigenständige Erfindung darstellen, wobei sich jedoch bestimmte Vorteile erst in Kombination mit dem erfindungsgemäßen System zeigen.

Eine erfindungsgemäße Lagervorrichtung umfasst eine Aufnahme zur Lagerung eines Geräteträgers, wobei die Lagervorrichtung, wie gesagt, insbesondere zur Verwendung in einem System nach einem der vorangehenden Ansprüche ausgelegt ist. Die Lagervorrichtung ist dabei zur Lagerung des Geräteträgers ausgelegt und/oder zur Anordnung des Geräteträgers an einer Adaptereinheit eines Fahrzeugs ausgelegt. Zu diesem Zweck ist die Lagervorrichtung dazu ausgestaltet, den Geräteträger zusammen mit einem an diesem befestigen Arbeitsgerät lösbar fixiert an der Aufnahme zu halten, und bevorzugt die Aufnahme bezüglich ihrer Höhe und/oder Neigung zu bewegen.

Bevorzugt umfasst die Lagervorrichtung Rollen zum Bewegen der Lagervorrichtung über eine Bodenfläche. Dies ist besonders vorteilhaft, da eine solche Lagervorrichtung zum Ankoppeln eins Arbeitsgerätes in eine passende Position an einem Fahrzeug geschoben werden kann bzw. nach dem Abkoppeln das Arbeitsgerät einfach an einen Ort zur Lagerung verschoben werden kann. Bevorzugt sind dabei mindestens zwei der Rollen lenkbar gestaltet.

Auch wenn ein Geräteträger Teil des Systems ist, kann es dennoch von Vorteil sein, ihn als Einzelstück anzusehen, z.B. in dem Fall, dass zwischen mehreren Arbeitsgeräten gewechselt werden soll. Jedes Arbeitsgerät kann an einem eigenen Geräteträger angebracht sein, und insbesondere auf einer eigenen Lagervorrichtung gelagert sein.

Ein erfindungsgemäßer Geräteträger ist zur Verwendung in einem erfindungsgemäßen System ausgelegt. Er umfasst bevorzugt ein Halterungselement an seiner Unterseite, das so angebracht und geformt ist, dass es mit einer Aufnahme einer erfindungsgemäßen Lagervorrichtung lösbar verbunden werden kann. Des Weiteren ist bevorzugt, dass der Geräteträger einen Drehbolzen aufweist, der als eine physische Drehachse zum Herankippen des Geräteträgers an eine Adaptereinheit (in eine Koppelposition) dienen kann und insbesondere als Halterungselement verwendet werden kann. In dieser Beschreibung genannte Merkmale des Systems, die sich auf dessen Geräteträger beziehen, beziehen sich ebenfalls auf diesen erfindungsgemäßen Geräteträger.

Genauso kann es von Vorteil sein, eine Adaptereinheit als Einzelstück anzusehen, z.B. wenn ein Arbeitsgerät von mehreren Fahrzeugen verwendet werden soll. An jedem Fahrzeug kann dessen eigene (bezüglich relevanter Bereiche identisch geformte) Adaptereinheit angebracht sein, die mit einem Geräteträger oder mehreren Geräteträgern mit unterschiedlichen Arbeitsgeräten verbunden werden kann.

Eine erfindungsgemäße Adaptereinheit ist zur Verwendung in einem erfindungsgemäßen System ausgelegt. Die Adaptereinheit ist bevorzugt an einem Fahrzeugrahmen angebracht, welcher mit einer, insbesondere kreuzförmigen, Versteifung gegen Scherkräfte und/oder Torsionskräfte versehen ist. In dieser Beschreibung genannte Merkmale des Systems, die sich auf dessen Adaptereinheit beziehen, beziehen sich ebenfalls auf diese erfindungsgemäße Adaptereinheit.

Ein erfindungsgemäßes Fahrtzeug ist insbesondere ein Lastkraftwagen bzw. ein Unimog und umfasst eine erfindungsgemäße Adaptereinheit, die an dem Fahrzeug fest montiert ist. Bevorzugt weist das Fahrzeug zusätzlich einen Fahrzeugrahmen auf, mit einer Versteifung wie sie im Folgenden noch genauen beschrieben wird.

Ein erfindungsgemäßes Ankoppelverfahren zum Ankoppeln eines Geräteträgers eines erfindungsgemäßen Systems (bzw. eines erfindungsgemäßen Geräteträgers) an einem Fahrzeug umfasst die folgenden Schritte:
- Bereitstellen eines Fahrzeugs mit einer daran montierten Adaptereinheit eines erfindungsgemäßen Systems nach einem der vorangehenden Ansprüche,
- Positionieren des Geräteträgers im Bereich der Adaptereinheit, insbesondere mittels einer beweglichen Lagervorrichtung gemäß der Erfindung, wobei bevorzugt die Höhe des Geräteträgers mittels einer Hubeinrichtung der Lagervorrichtung eingestellt wird,
- Herankippen des Geräteträgers um eine Drehachse im unteren Bereich der Adaptereinheit und/oder horizontales Einschieben des Geräteträgers in eine Koppelposition mit der Adaptereinheit,
- Fixieren des Geräteträgers mittels des Verriegelungsmechanismus, wobei mindestens ein Verriegelungselement in eine Schließposition bewegt wird.

Ein erfindungsgemäßes Abkoppelverfahren zum Abkoppeln eines Geräteträgers eines erfindungsgemäßen Systems (bzw. eines erfindungsgemäßen Geräteträgers) von einem Fahrzeug, umfasst die folgenden Schritte:
- Positionieren einer Lagervorrichtung, bevorzugt erfindungsgemäße Lagervorrichtung, insbesondere eines Hubwagens, unter dem Geräteträger,
- Freigeben des Geräteträgers mittels des Verriegelungsmechanismus, wobei mindestens ein Verriegelungselement in eine Entnahmeposition bewegt wird,
- Auskippen des Geräteträgers um eine Drehachse im unteren Bereich der Adaptereinheit und oder horizontales Herausschieben des Geräteträgers aus einer Koppelposition mit der Adaptereinheit, bevorzugt mittels einer Hubeinrichtung der Lagervorrichtung.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können.

Gemäß einer bevorzugten Ausführungsform greifen die Kopplungsstrukturen in der Koppelposition von Adaptereinheit und Geräteträger zusätzlich so ineinander, dass in der Koppelposition durch einen formschlüssigen zweiten Anschlag der Kopplungsstrukturen aneinander eine relative vertikale Verschiebung des Geräteträgers zur Adaptereinheit nach unten blockiert wird. Es ist also nun ein vertikales Verschieben von Adaptereinheit und Geräteträger zueinander in der Koppelposition nicht mehr möglich (weder nach oben noch nach unten). Dies erhöht die Qualität der Halterung eines Arbeitsgerätes, da dieses ohne zu wackeln gehalten werden kann und Kräfte sicher in die Fahrzeugstruktur einen Fahrzeugrahmen) eingeleitet werden können. Bevorzugt sind die Kopplungsstrukturen so geformt, dass eine der Kopplungsstrukturen (z.B. die erste Kopplungsstruktur an der Adaptereinheit) eine Ausbuchtung aufweist, die in eine passende Einbuchtung der anderen Kopplungsstruktur (z.B. der zweiten Kopplungsstruktur an dem Geräteträger) eingreifen kann, so dass auf diese Weise in der Koppelposition die beiden formschlüssigen Anschläge der Kopplungsstrukturen aneinander hergestellt werden.

Es ist dabei anzumerken, dass sich Konsolen über die Zeit mitunter gelockert haben, so dass sie mit dem Arbeitsgerät an ihrer Halteplatte wackelten, z.B. durch Abschliff von Material. Es ist diesbezüglich bevorzugt, dass der erste Anschlag sowie der zweite Anschlag mittels konischen bzw. keilförmigen Strukturen gebildet werden, z.B. einer keilförmigen Ausbuchtung, die in eine entsprechend keilförmige Einbuchtung eingreift. Zudem ist bevorzugt, dass eine Verriegelung mittels der Verriegelungselementen so gestaltet ist, dass sie in Schließposition stets eine Spannung auf den Formschluss der Anschläge ausübt. Dies kann z.B. durch keilförmige Verriegelungselemente erreicht werden, die so in Ausnehmungen eingreifen, dass eine resultierende Kraft auf die Anschläge wirkt. Eine Spannung kann durch Druck in Hydraulikzylindern erreicht werden oder durch eine gefederte Halterung der Verriegelungselemente, z.B. durch eine Feder. Es ist dabei besonders bevorzugt, dass ein Verriegelungselement, z.B. ein Verriegelungsbolzen des Verriegelungsmechanismus in der Koppelposition in einem Bereich zwischen dem ersten Anschlag und den zweiten Anschlag blockierend eingreift, insbesondere in eine Ausnehmung in der Ausbuchtung.

Gemäß einer bevorzugten Ausführungsform weist die Adaptereinheit zwei erste Kopplungsstrukturen auf, die rechts und links zu einer mittleren vertikalen Fahrzeugebene, insbesondere spiegelbildlich zu dieser, angeordnet sind und bevorzugt gleichartig geformt sind. Dies kann z.B. durch jeweils eine Adapterplatte rechts und eine links zur Fahrzeugmitte erreicht werden. Eine solche Ausführungsform hat den Vorteil, dass Kräfte, die ein Arbeitsgerät über den Geräteträger auf die Adaptereinheit ausübt, symmetrisch in die Fahrzeugkonstruktion eingeleitet werden können und insbesondere Torsionskräften ein wirksamer Hebel entgegengebracht wird. Bei einer solchen Ausführungsform sollte natürlich auch der Geräteträger zwei, bevorzugt parallel formschlüssig wirkende, zweite Kopplungsstrukturen aufweisen, die so geformt und angeordnet sind, dass sie in der Koppelposition in die beiden ersten Kopplungsstrukturen eingreifen.

Gemäß einer bevorzugten Ausführungsform ist die Adaptereinheit an einem Fahrzeugrahmen angebracht, welcher mit einer, insbesondere kreuzförmigen, Versteifung gegen Scherkräfte und/oder Torsionskräfte versehen ist. Auf diese Weise können Kräfte gut in den Fahrzeugrahmen eingebracht werden, der diese durch die bevorzugte Versteifung ohne eine gravierende Verformung aufnehmen kann. Durch die Versteifung kann sich auch der Vorteil ergeben, dass der Fahrzeugrahmen niedriger gebaut werden kann, als ein herkömmlicher Fahrzeugrahmen, was vorteilhaft in einer geringeren Höhe einer Ladefläche resultieren kann.

Gemäß einer bevorzugten Ausführungsform umfasst der Verriegelungsmechanismus eine Bewegungseinheit zur automatischen Bewegung der Verriegelungselemente in die Schließposition und die Entnahmeposition. Diese Bewegungseinheit kann mannigfaltiger Natur sein, z.B. ein Linearmotor oder ein Zylinder, z.B. einer Pneumatik oder Hydraulik, wobei eine Hydraulik bzw. eine Gruppe hydraulischer Zylinder bevorzugt ist. Die Bewegungseinheit ist bevorzugt an dem Geräteträger angeordnet und die Verriegelungselemente greifen in der Schließposition in Löcher in der Adaptereinheit ein. Alternativ ist die Bewegungseinheit bevorzugt an der Adaptereinheit angeordnet und die Verriegelungselemente greifen in der Schließposition in Löcher in dem Geräteträger ein. Die Löcher befinden sich dabei insbesondere in einer Kopplungsstruktur.

Generell sei hier gesagt, dass jegliche Bewegung von Elementen z.B. zur Justage oder Verriegelung mittels einer Motorisierung (z.B. eine motorisierte Hydraulikpumpe) oder durch Handbetrieb (z.B. eine Handpumpe für eine Hydraulik) erfolgen kann. Bevorzugt werden diesbezügliche Komponenten, die mit dem Fahrzeug verbunden sind (z.B. die Adaptereinheit) oder mit diesem verbindbar sind (z.B. der Geräteträger) durch eine Motorisierung betrieben, bevorzugt durch eine Hydraulikpumpe des Fahrzeugs. Der Geräteträger ist dazu bevorzugt mittels einer Schnellkupplung für eine Hydraulik und/oder eine Elektrik mit dem Fahrzeug verbunden. Bewegungen bei Komponenten, die nicht mit dem Fahrzeug verbunden werden sollen, z.B. ein Hubwagen wie unten beschrieben, werden bevorzugt mit einer eigenen Motorisierung oder mittels Handbetrieb erreicht.

Für eine vorteilhafte Verriegelung greifen in eine Kopplungsstruktur in der Schließposition zwei Verriegelungselemente (Verriegelungsbolzen) ein. Bezüglich der oben beschriebenen bevorzugten Ausführungsform, bei der sich eine Adapterplatte rechts und eine links der Fahrzeugmitte befindet, wären die zwei Verriegelungselemente rechts und zwei links. Bevorzugt greift dabei ein Verriegelungselement im oberen Bereich der Kopplungsstruktur ein und eines im unteren Bereich, was eine optimale Lastverteilung ergibt.

Wie oben bereits gesagt, sind die Verriegelungselemente bevorzugt keilförmig gestaltet, so dass bei einem kontinuierlichen Druck auf den Bereich der Verriegelung eine konische Ausbuchtung (z.B. der Adaptereinheit) in eine negativ geformte konische Einbuchtung (z.B. des Geräteträgers) gepresst wird, so dass stets ein fester formschlüssiger Halt vorliegt. Dadurch wird ein Wackeln von Adaptereinheit und Geräteträger zueinander durch formschlüssige Anschläge verhindert.

Gemäß einer bevorzugten Ausführungsform weist mindestens eine erste Kopplungsstruktur der Adaptereinheit an ihrer Unterseite eine nach unten offene Positionierungshilfe auf, insbesondere eine U-förmige Aussparung. Der Geräteträger weist in diesem Falle bevorzugt einen Drehbolzen auf, der so angeordnet ist, dass er zum Erreichen der Koppelposition von unten in die Positionierungshilfe hinein bewegt werden muss. Damit ist zwar kein rein horizontales Einschieben mehr möglich, jedoch kann ein Herankippen einfach über diese Drehbolzen als Drehachse erfolgen. Der in die Positionierungshilfe eingeschobene Drehbolzen bildet also in diesem Falle eine physische Drehachse zum Herankippen des Geräteträgers. Diesbezüglich wird beim Ankoppeln bevorzugt ein leicht nach hinten gekippter und (bezüglich der Höhe der Koppelposition) leicht abgesenkter Geräteträger zunächst horizontal an die Adapterplatte herangeschoben, dann nach oben gehoben bis die Drehbolzen in die Positionierungshilfe eingreifen und anschließend nach vorne an die Adaptereinheit herangekippt.

Gemäß einer bevorzugten Ausführungsform weist mindestens eine zweite Kopplungsstruktur an dem Geräteträger an ihrer Unterseite ein Halterungselement auf, das bevorzugt mit einer Aufnahme einer erfindungsgemäßen Lagervorrichtung lösbar verbunden werden kann (also z.B. für eine sichere Halterung an einem Hubwagen benötigt wird). Dieses Halterungselement ist bevorzugt ein vorgenannter Drehbolzen (der länger gestaltet ist, als zum Drehen unbedingt notwendig) oder eine Verlängerung eines Drehbolzens. In einen solchen Bolzen können Haken an einer Lagervorrichtung sehr gut eingreifen und einen sicheren Halt gewährleisten.

Ein erfindungsgemäßes System umfasst insbesondere eine Anzahl der vorangehend beschriebenen Merkmale und dient zur Kopplung eines Arbeitsgeräts an einem Fahrzeug, das System umfasst eine Adaptereinheit, ausgelegt zur festen Anbringung an der Front und/oder am Heck des Fahrzeugs und einen Geräteträger ausgelegt zum Fixieren und Tragen des Arbeitsgeräts, und zusätzlich eine bewegliche Lagervorrichtung, insbesondere einen beweglichen Hubwagen. Diese Lagervorrichtung ist mit einer Aufnahme für den Geräteträger ausgestattet, bevorzugt einer 3-Punkt-Halterung, und umfasst bevorzugt zusätzlich eine Hubeinrichtung, die dazu ausgestaltet ist, die Aufnahme bezüglich ihrer Höhe und/oder ihrer Orientierung zu verändern. Dies dient dazu, die Aufnahme von unten an einen mit einer Adaptereinheit gekoppelten Geräteträger zu heben, bzw. einen Geräteträger in eine Kopplungsposition zu bringen und dabei insbesondere einen Geräteträger in der Aufnahme zu kippen. Es müssen also nicht unbedingt die vorgenannten Anschläge oder eine Verriegelungsvorrichtung vorhanden sein, obwohl diese besonders bevorzugt sind.

Bei einer bevorzugten Ausführungsform der Lagervorrichtung umfasst die Aufnahme eine Mehrpunkt-Halterung, insbesondere eine 3-Punkt-Halterung, die dazu ausgelegt ist, einen Geräteträger mittels Befestigungspunkten (z.B. Haken oder Nuten) zu halten. Bevorzugt sind dabei mindestens zwei horizontal beabstandete Befestigungspunkte dazu ausgelegt, den Geräteträger an seiner bestimmungsgemäß dem Fahrzeug zugewandten Seite zu halten und mindestens ein Befestigungspunkt ist dazu ausgelegt, den Geräteträger an dessen gegenüberliegender (der fahrzeugabgewandten) Seite zu halten, insbesondere an einer am Geräteträger angebrachten Anhängerkupplung. Eine solche Befestigung an einer Anhängerkupplung ist besonders bevorzugt, da eine solche sowieso für Lasten ausgelegt ist (insbesondere für eine Stützlast größer als 500 kg, oder mindestens 700 kg, insbesondere mehr als 1000kg) und diese zudem im eingekoppelten Zustand des Geräteträgers zum Ziehen eines Anhängers verwendet werden kann.

Eine bevorzugte Ausführungsform von Befestigungspunkten sind nach oben offene, U-förmige Halterungen, in denen horizontale Bolzen des Geräteträgers gehalten werden können. Zur Sicherung, gegen ein Herausspringen sollten diese Halterungen nach oben abschließbar sein. Dies wird bevorzugt durch gefederte Haken erreicht, die über Bolzen herübergreifen, welche in den Halterungen ruhen. Solch ein Haken sollte so geformt sein, dass er bei einem Einführen eines Bolzens von oben in eine Halterung (insbesondere durch den Bolzen selber) in eine Öffnungsposition gedrückt wird und nach dem Einlegen des Bolzens in die Halterung in eine Sicherungsposition über den Bolzen springt, z.B. mittels einer Feder. Zum Herausheben des Bolzens aus der Halterung sollte der Haken bevorzugt einen Öffnungsstift aufweisen, mittels dessen der Haken am Bolzen in eine Öffnungsposition gedrückt werden kann und nach Herausnahme des Bolzens wieder in die Sicherungsposition schwingt, nur diesmal unter dem Bolzen.

Eine bevorzugte Ausführungsform der Lagervorrichtung ist als Hubwagen ausgestaltet und umfasst eine Hubeinrichtung, die dazu ausgelegt ist, die Aufnahme (zumindest die Befestigungspunkte) mittels Hubelementen vertikal zu heben und senken und insbesondere zusätzlich so zu kippen, dass ein auf der Aufnahme angebrachter Geräteträger mit seiner Oberseite zumindest nach hinten und vorne verkippt werden kann. Die Verkippung wird dabei bevorzugt durch eine unabhängige Höhenverstellung von Befestigungspunkten einer Mehrpunkt-Halterung mittels unabhängig steuerbaren Hubelementen erreicht.

Ein Teil der Hubeinrichtung ist bevorzugt als Hubschere ausgestaltet, insbesondere der Teil welcher bestimmungsgemäß an dem fahrzeugseitigen Bereich des Geräteträgers angreift. Alternativ oder ergänzend ist derjenige Teil der Hubeinrichtung, der bestimmungsgemäß am fahrzeugabgewandten Bereich des Geräteträgers angreift, schwenkbar, so dass dessen Befestigungspunkt zum Fahrzeug hin und vom Fahrzeug weg gekippt werden kann. Dies ist besonders vorteilhaft, wenn dieser Befestigungspunkt zum Halten des Geräteträgers in eine am Geräteträger angebrachte Anhängerkupplung eingreifen soll. Die Hubeinrichtung kann zusätzlich noch steuernde Elemente umfassen, z.B. Hydraulikleitungen und eine Hydraulikpumpe.

Es kann durchaus ein Hubelement die Höhe von zwei oder mehr Befestigungspunkten gemeinsam verändern, insbesondere von vorderen Befestigungspunkten.

Gemäß einer bevorzugten Ausführungsform weist zumindest eine Komponente der Gruppe Adaptereinheit, Geräteträger (insbesondere an deren Kopplungsstrukturen) und Lagervorrichtung (insbesondere in dem Bereich der Befestigungspunkte) Führungselemente auf (können auch als "Positionierungselemente" bezeichnet werden), bevorzugt konisch oder keilförmig ausgeformte bzw. schräg angeordnete Bleche. Diese Führungselemente an sich und deren Anordnung sind im Stand der Technik bekannt. Häufig bilden diese V-fömige bzw. trichterförmige Strukturen und erleichtern die Aneinanderführung von Bauteilen.

Ein bevorzugtes Ankoppelverfahren, bei dem ein Geräteträger an eine Adapterplatte herangekippt wird, umfasst die folgenden Schritte:
- horizontales Heranbewegen eines nach hinten gekippten und bezüglich der Höhe der Koppelposition abgesenkten Geräteträgers an die Adapterplatte.

Der Geräteträger sollte dabei zumindest so weit nach hinten gekippt sein, dass sich die Anschläge der Kopplungsstrukturen nicht berühren, wenn sich die unteren Bereiche der Komponenten bereits berühren. Der Geräteträger sollte zumindest so weit abgesenkt sein, dass die Drehachse in die Drehposition an der Adapterplatte heranreicht. Das Heranschieben erfolgt bevorzugt mittels eines Hubwagens.
- nach oben heben des Geräteträgers bis dessen Drehachse die Drehposition erreicht hat. Bei einer rein virtuellen Drehachse sollte die korrekte Position bekannt sein. Bei einer physischen Drehachse in Form eines Drehbolzens wird der Geräteträger so positioniert, dass der Drehbolzen in eine Positionierungshilfe an der Adapterplatte eingreift.
- Herankippen des Geräteträgers nach vorne an die Adaptereinheit in eine Koppelposition.

Ein bevorzugtes Fahrzeug umfasst eine Ladefläche, die bevorzugt neigbar ist, insbesondere nach hinten. Es ist in dieser Hinsicht bevorzugt, dass die Adaptereinheit auf ihrer Oberseite zumindest in ihrem hinteren Bereich nach hinten hin abfallend abgeschrägt ist, wobei der Winkel der Abschrägung bevorzugt größer als 30°, insbesondere größer als 40° ist und/oder bevorzugt kleiner als 60°, insbesondere kleiner als 50° ist. Diese Abschrägung ist bevorzugt so gestaltet, dass bei einer Neigung der Ladefläche nach hinten diese nicht an die Adaptereinheit stößt. Dies erlaubt eine höhere Anordnung der Adaptereinheit und trotzdem eine Neigung der Ladefläche (zumindest bei abgenommenen Geräteträger).

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 ein Fahrzeug mit einem bevorzugten Ausführungsbeispiel eines erfindungsgemäßen Systems,
Figur 2 eine bevorzugte Ausführungsform eines Fahrzeugrahmens mit einer Adaptereinheit,
Figur 3 eine bevorzugte Ausführungsform eines Geräteträgers,
Figur 4 eine bevorzugte Ausführungsform einer Adaptereinheit neben einem bevorzugten Geräteträger,
Figur 5 eine bevorzugte Art der Kopplung einer Adaptereinheit an einen Geräteträger eines bevorzugten Systems,
Figur 6 eine bevorzugte Verriegelung einer Adaptereinheit mit einem bevorzugten Geräteträger,
Figur 7 eine bevorzugte Ausführungsform einer Lagervorrichtung,
Figur 8 eine bevorzugte Art der Lagerung eines Geräteträgers in einer bevorzugten Lagervorrichtung in perspektivischer Ansicht,
Figur 9 eine bevorzugte Art der Lagerung eines Geräteträgers in einer bevorzugten Lagervorrichtung in einer Ansicht von oben,
Figur 10 eine bevorzugte Art der Lagerung eines Geräteträgers in einer bevorzugten Lagervorrichtung in einer Ansicht von der Seite.
Figur 11 ein bevorzugtes Fahrzeug.

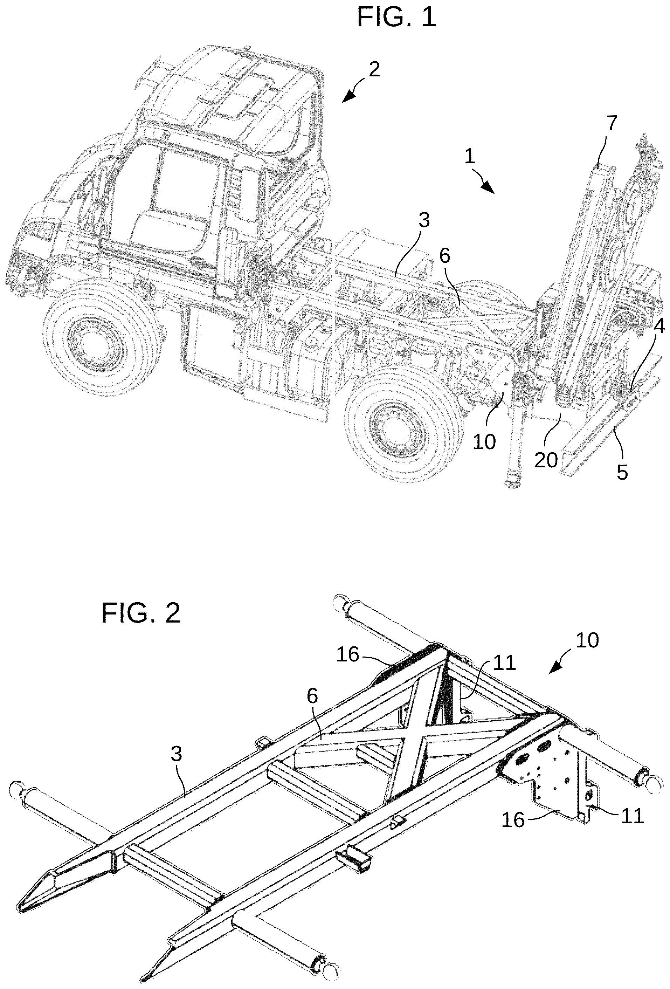

**Figur 1** zeigt perspektivisch ein Fahrzeug 2, hier einen Lastkraftwagen ("LKW") mit einem bevorzugten Ausführungsbeispiel eines erfindungsgemäßen Systems 1. Der LKW 2 ist mit einem besonderen Fahrzeugrahmen 3 mit einer kreuzförmigen Versteifung 6 ausgestattet, damit er die zusätzliche Last eines angebrachten Arbeitsgeräts 7 (hier z.B. eines Krans) aufnehmen kann. An dem Fahrzeugrahmen 3 ist am Heck des Fahrzeugs 2 eine Adaptereinheit 10 montiert, die in den nachfolgenden Figuren noch besser zu sehen ist. Die Adaptereinheit könnte sich auch an der Front befinden, gezeigt ist hier jedoch eine Position am Heck, da dies der häufigste Punkt einer Anbringung eines Arbeitsgerätes ist (außer z.B. von Schneepflug-Geräten). An die Adaptereinheit 10 ist ein Geräteträger 20 angekoppelt, an den das Arbeitsgerät 7 fest angebracht ist. Damit der LKW 2 mit einem angekoppelten Geräteträger 20 einen Anhänger ziehen kann, ist der Geräteträger 20 hier mit einer Anhängerkupplung 4 ausgestattet, die über einer ebenfalls am Geräteträger 20 angebrachten Stoßstange 5 montiert ist. Diese Anhängerkupplung 4 kann auch noch zur An- und Abkopplung des Geräteträgers 20 sowie zu dessen Lagerung verwendet werden, wie im Folgenden noch genauer ausgeführt wird.

**Figur 2** zeigt perspektivisch eine bevorzugte Ausführungsform eines Fahrzeugrahmens 3 mit einer kreuzförmigen Versteifung 6 mit einer daran fest angebrachten Adaptereinheit 10, Diese Adaptereinheit 10 umfasst zwei Adapterplatten 16, eine Adapterplatte 16 rechts und eine links der mittleren vertikalen Fahrzeugebene, die spiegelbildlich zueinander angeordnet und geformt sind. Daraus ergeben sich dann zwei erste Kopplungsstrukturen 11, die hier die Endstücke der Adapterplatten 16 darstellen. Diese Kopplungsstrukturen 11 dienen der Kopplung mit einem Geräteträger 20 (s. z.B. nachfolgende Figuren).

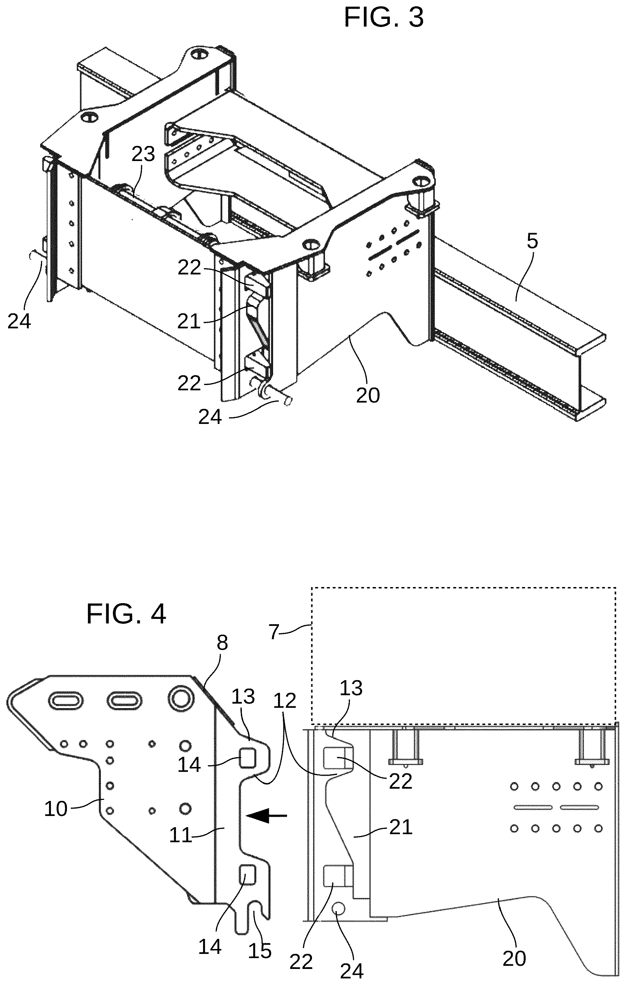

**Figur 3** zeigt perspektivisch eine bevorzugte Ausführungsform eines Geräteträgers 20. Zur besseren Einordnung in Figur 1 ist dieser wieder mit einer Stoßstange 5 ausgestattet, die jedoch nicht zwingend Teil des Geräteträgers 20 sein muss. Die heruntergezogene Ausgestaltung des Geräteträgers 20, dort wo die Stoßstange 5 befestigt ist, dient in manchen Staaten insbesondere einer Erfüllung gesetzlicher Vorgaben. Der Geräteträger 20 ist so ausgeformt, dass er mit der Adaptereinheit 10 aus Figur 3 koppelbar ist. Er umfasst dazu zwei zweite Kopplungsstrukturen 21, die in die ersten Kopplungsstrukturen 11 des Adaptereinheit 10 eingreifen können, und vier Verriegelungselemente 22 in Form von keilförmigen Bolzen, von denen zwei im Bild schräg nach vorne ragen und zwei verdeckt schräg nach hinten. Diese Bolzen können mittels jeweils einer Bewegungseinheit 23, hier ein Hydraulikzylinder durch Aussparungen in den Seiten des Geräteträgers 20 nach außen in eine Schließposition verschoben werden und nach innen in eine Entnahmeposition. Unten am Geräteträger 20 sind rechts und links zwei Halterungselemente 24 in Form von Drehbolzen 24 dargestellt, die der Positionierung dienen. Sie selbst und ihre Funktion werden nachfolgend noch genauer beschrieben.

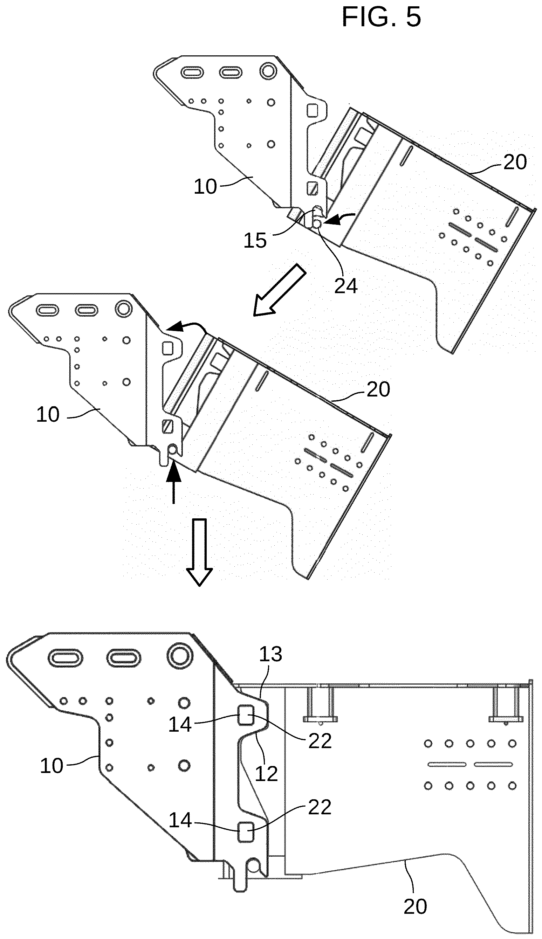

**Figur 4** zeigt in Seitenansicht eine bevorzugte Ausführungsform einer Adaptereinheit 10 neben einem bevorzugten Geräteträger 20, beispielsweise eine Adaptereinheit 10 nach Figur 2 (ohne Fahrzeugrahmen 3), neben einem bevorzugten Geräteträger 20 nach Figur 3. Auf dem Geräteträger 20 ist hier ein gestrichelter Kasten dargestellt, der ein Arbeitsgerät 7 symbolisieren soll, z.B. das Fundament eines Krans oder eines Erdbohrers oder einen Kraftheber. Die hier dargestellte Szene könnte den Zustand vor einem Ankoppeln oder nach einem Abkoppeln des Geräteträgers 20 darstellen. Beispielsweise könnte einfach ein Ankoppeln des Geräteträgers 20 durch ein Einschieben in die Adaptereinheit 10 in Richtung des Pfeils erfolgen, wenn unten die Positionierungshilfe 15 nicht wäre, die den Drehbolzen 24 bei dieser Bewegung blockieren würde. Von der Seite sind zwei Ausnehmungen 14 in der Adaptereinheit zu erkennen, in die Verriegelungselemente 22 (die keilförmigen Haltebolzen) des Geräteträgers 20 eingreifen können, nachdem der Geräteträger 20 sich in einer korrekten Koppelposition an der Adaptereinheit 10 befindet (s. Figur 5).

Die erste Kopplungsstruktur 11 der Adaptereinheit 10 ist so geformt, dass sie in ihrem oberen Bereich zumindest teilweise in die zweite Kopplungsstruktur 21 des Geräteträgers 20 eingreifen kann so dass die Kopplungsstrukturen 11, 21 in der Koppelposition von Adaptereinheit 10 und Geräteträger 20 dermaßen ineinander greifen, dass durch einen formschlüssigen ersten Anschlag 12 und einen formschlüssigen zweiten Anschlag 13 der Kopplungsstrukturen 11, 21 aneinander eine relative vertikale Verschiebung des Geräteträgers 20 zur Adaptereinheit nach oben sowie nach unten blockiert wird. Die erste Kopplungsstruktur 11 hat dazu im oberen Teil die Form einer Ausbuchtung, die in eine passende Einbuchtung der zweiten Kopplungsstruktur (s. den Raum zwischen den Anschlägen 12, 13) eingreifen kann. In diese Ausbuchtung ist eine der Ausnehmungen 14 angeordnet, so dass eines der Verriegelungselemente 21 des Verriegelungsmechanismus 22, 23 in der Koppelposition in die Ausnehmung 14 der Ausbuchtung eingreifen kann.

Die Adaptereinheit weist auf ihrer Oberseite im hinteren Bereich eine nach hinten hin abfallende Abschrägung 8 auf, welche einen Neigungswinkel von ca. 45° hat. Diese Abschrägung ist so gestaltet, dass bei einer Neigung einer Ladefläche eines Fahrzeugs, an dem sie montiert ist (s. z.B. Figur 1) diese nicht an die Adaptereinheit stößt.

**Figur 5** zeigt eine bevorzugte Art der Kopplung einer Adaptereinheit 10 an einen Geräteträger 20 eines bevorzugten Systems 1. Die oberen kleinen Darstellungen geben dabei Zwischenschritte bis zum Erreichen der Koppelposition (unten) wieder.

In der oberen Darstellung wird, ausgehend von einer Position wie in Figur 4 dargestellt, der Geräteträger 20 wie mit dem Pfeil angedeutet etwas nach unten und zu der Adaptereinheit 11 hin bewegt, so dass sich der Drehbolzen 24 des Geräteträgers 20 genau unter der U-förmigen Positionierungshilfe 15 der Adaptereinheit 10 befindet.

In der mittleren Darstellung wird der Geräteträger in Richtung des unteren Pfeils etwas nach oben gehoben, so dass der Drehbolzen in die Positionierungshilfe 15 eingreift. In dieser Position wirkt der Drehbolzen 24 als physische Drehachse und es ist ein geführtes Kippen des Geräteträgers 20 an die Adaptereinheit 10 möglich (oberer gebogener Pfeil).

Nachdem der Geräteträger 20 an die Adaptereinheit 10 herangekippt worden ist, befindet er sich in der Koppelposition. Die Verriegelungselemente 21 des Geräteträgers 20 können nun in die Ausnehmungen 14 der Adaptereinheit 10 eingreifen und diese beiden Elemente in ihrer Schließposition miteinander verriegeln. Bevorzugt ist hier eine Verriegelung unter Spannung, welche den Geräteträger 20 stets an die Adaptereinheit 10 herandrückt.

Bevorzugt sind die Verriegelungselemente 22 dazu keilförmig gestaltet, so dass bei einem kontinuierlichen Druck nach außen die konische Ausbuchtung der Adaptereinheit 10 in die negativ geformte konische Einbuchtung des Geräteträgers 20 gepresst wird, so dass stets ein fester formschlüssiger Halt vorliegt. Dadurch wird ein Wackeln von Adaptereinheit 10 und Geräteträger 20 zueinander verhindert.

Ein Abkoppelvorgang verläuft im Grunde genau umgekehrt, also in der Figur von unten nach oben entgegen der Pfeilrichtungen.

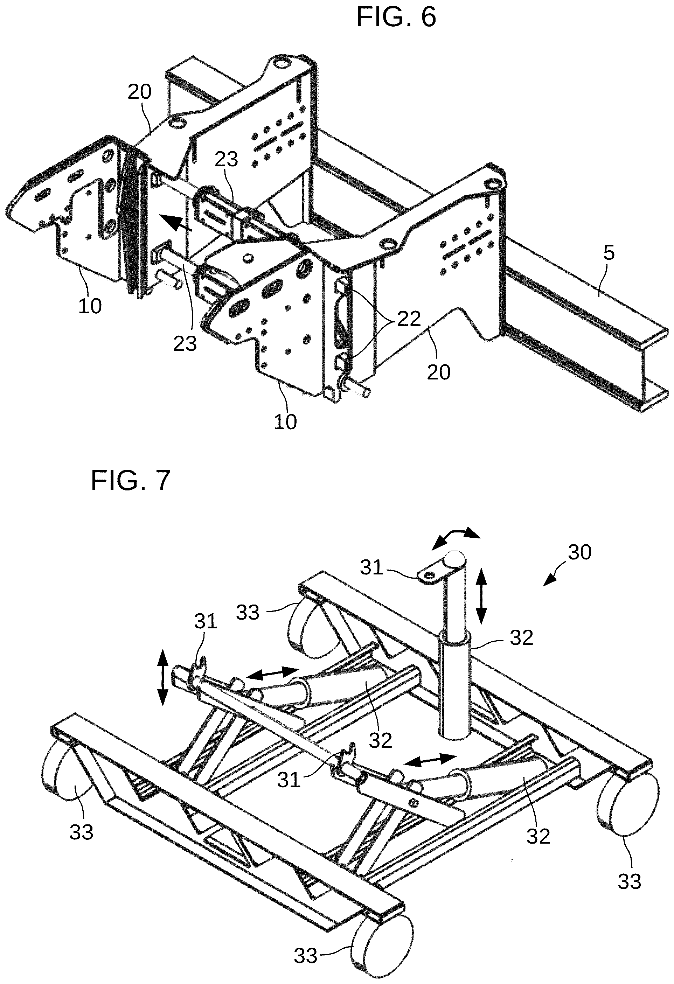

**Figur 6** zeigt perspektivisch eine bevorzugte Verriegelung einer Adaptereinheit 10 mit einem bevorzugten Geräteträger 20 mittels vier die Verriegelungselementen 22 die von vier Bewegungseinheiten 23 (hier Hydraulikzylinder) in ihre Schließposition gedrückt werden. Dies könnte der Zustand sein, der in Figur 5 unten in Seitenansicht dargestellt ist. Zur besseren Sicht auf die Bewegungseinheiten 23 ist der Geräteträger 20 hier vorne offen dargestellt, was in der Praxis aus statischen Gründen jedoch nachteilhaft sein könnte.

**Figur 7** zeigt eine bevorzugte Ausführungsform einer Lagervorrichtung 30 in Form eines Hubwagens 30. Diese Lagervorrichtung 30 umfasst eine Aufnahme 31 zur Lagerung eines Geräteträgers 20 in Form einer bevorzugten 3-Punkt-Halterung mit drei Befestigungspunkten 31. Die Lagervorrichtung 30 ist dabei hier so geformt, dass sie sowohl zur Lagerung eines Geräteträgers 20 mit angebrachtem Arbeitsgerät als auch zur Anordnung des Geräteträgers 20 an einer Adaptereinheit 10 eines Fahrzeugs 2 ausgelegt ist. Dies wird nachfolgend noch genauer erläutert.

Die Lagervorrichtung 30 ist mittels Rollen 33 mobil gestaltet, so dass sie über einen glatten Untergrund bewegt und z.B. an das Heck eines LKW 2 herangeschoben werden kann. Die Befestigungspunkte 31 der Aufnahme 31 sind hier bezüglich ihrer Höhe mittels einer Hubeinrichtung 32 mit Hubelementen 32 (hier Hydraulikzylinder) beweglich, so dass sie und mit ihnen ein darauf angebrachter Geräteträger 20 vertikal gehoben und gesenkt werden kann (s. vertikale Doppelpfeile). Durch eine unterschiedliche Steuerung des hinteren Hubelements 32 (vertikaler Doppelpfeil) zu den beiden unteren Hubelementen 32 (schräge Doppelpfeile) können die beiden vorderen Befestigungspunkte 31 auf eine andere Höhe des hinteren Befestigungspunkts 31 gebracht werden und die Aufnahme (und damit auch ein darauf angebrachter Geräteträger) nach hinten und vorne verkippt werden.

Es ist bevorzugt, dass der hintere Befestigungspunkt 31 zusammen mit seinem Hubelemente 32 verschwenkbar angeordnet ist (s. gekrümmten Doppelpfeil), so dass er von der Seite her in eine Befestigungsposition gebracht werden kann, z.B. in eine Anhängerkupplung 4 eingreifen kann.

Durch die horizontale Beabstandung der vorderen beiden Befestigungspunkte 31, die mit dem hinteren Befestigungspunkt 31 ein Dreieck bilden, ist ein sicherer Halt eines Geräteträgers 20 gewährleistet. Beispielsweise kann ein Geräteträger 20 mit einem auf diesem angebrachten Kran sicher gelagert werden und zum Verstauen mittels der Lagervorrichtung 30 in eine Ecke einer Lagerhalle geschoben werden. Zum Ankoppeln schiebt man den dermaßen gelagerten Geräteträger 20 mit der Lagervorrichtung 30 wieder an eine LKW heran und positioniert den Geräteträger 20 mittels der Lagervorrichtung 30 z.B. so wie in den Figuren 4 und 5 gezeigt.

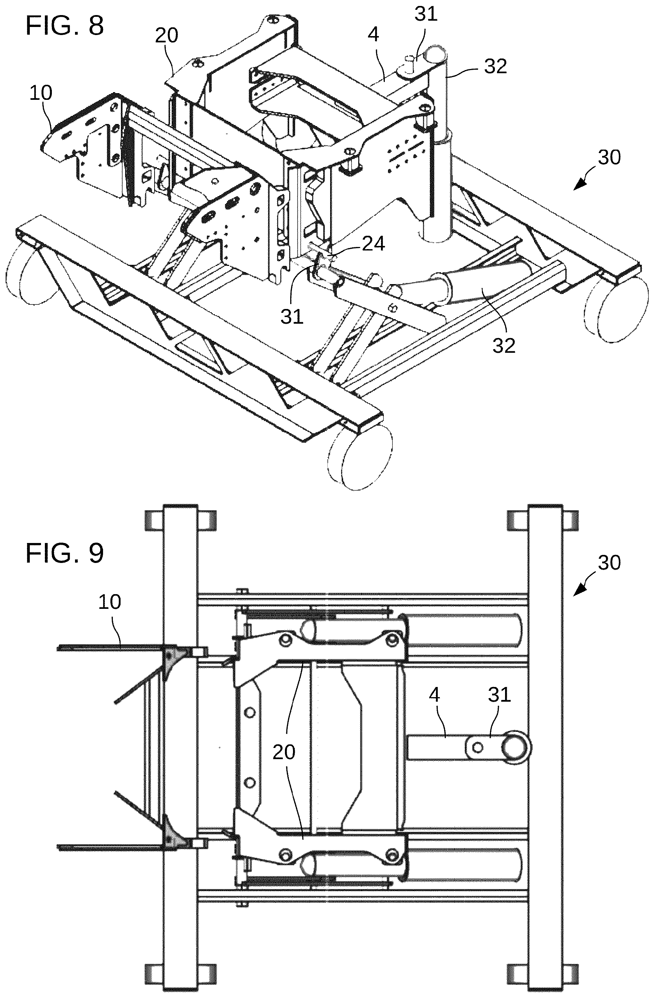

**Figur 8** zeigt eine bevorzugte Art der Lagerung eines Geräteträgers 20 in einer bevorzugten Lagervorrichtung 30 in perspektivischer Ansicht. Die Lagervorrichtung 30 ist hier die in Figur 7 dargestellte. Es wird z.B. der Zustand von Geräteträger 20 zur Adaptereinheit 10 abgebildet, wie er in Figur 4 gezeigt ist. Wie vorangehend gesagt kann nun die Lagervorrichtung 30 dazu verwendet werden, den Geräteträger zu bewegen, wie in Figur 5 dargestellt ist. Zum Verkippen muss einfach die Höhe des hinteren Hubelements 32 verändert werden, wobei die beiden vorderen Hubelemente 32 unverändert bleiben.

Besonders vorteilhaft ist hier, dass der hintere Befestigungspunkt 31 in eine an dem Geräteträger 20 angebrachte Anhängerkupplung 4 eingreift. Zu dem Vorteil, dass mit der Anhängerkupplung 4 noch ein Anhänger gezogen werden kann kommt hier hinzu, dass sie als eine sichere und einfach zu handhabende Befestigungsmöglichkeit dient, die sehr schnell mit einem Befestigungspunkt 31 verbunden werden kann.

**Figur 9** zeigt eine bevorzugte Art der Lagerung eines Geräteträgers 20 in einer bevorzugten Lagervorrichtung 30 gemäß Figur 8 in einer Ansicht von oben. Hier ist noch einmal die Befestigung des hinteren Befestigungspunkts 31 in der Anhängerkupplung 4 zu sehen.

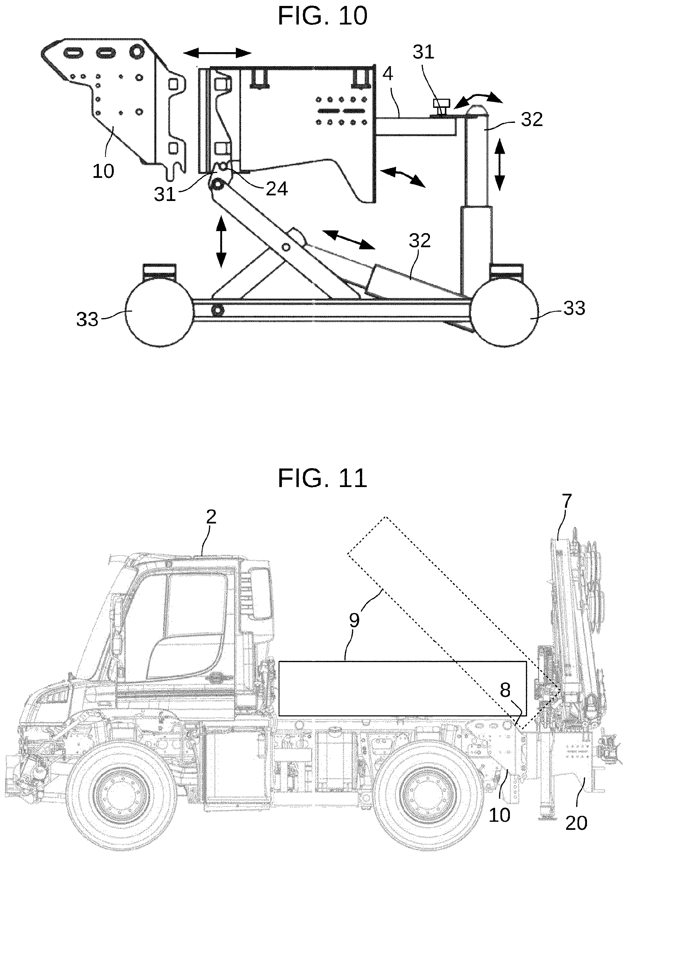

**Figur 10** zeigt eine bevorzugte Art der Lagerung eines Geräteträgers 20 in einer bevorzugten Lagervorrichtung 30 gemäß Figur 8 in einer Ansicht von der Seite. Hier können die Bewegungen des Geräteträgers 20 (schieben, heben, kippen) durch Bewegung der Hubelemente 32 nachvollzogen werden. Der gekrümmte Pfeil über dem hinteren Hubelement 32 soll andeuten, dass diese samt ihres Befestigungspunktes 31 verschwenkt werden kann, um einfach in die Anhängerkupplung 4 einzugreifen.

**Figur 11** zeigt in Seitenansicht ein bevorzugtes Fahrzeug 2 (hier einen Unimog) mit einem erfindungsgemäßen System 1, auf dem ein Kran 7 als Arbeitsgerät 7 montiert ist, wie es in Figur 1 dargestellt ist, mit dem Unterschied, dass hier zusätzlich noch eine Ladefläche 9 eingezeichnet wurde. Den genauen Aufbau des Systems 1, insbesondere die Konstruktion der am Fahrzeug 2 angebrachten Adaptereinheit 10, kann man dabei Figur 1 entnehmen. Die Ladefläche 9 ist in diesem Beispiel bevorzugt nach hinten neigbar, wie es gestrichelt angedeutet wurde. An der gestrichelten Darstellung der Ladefläche sieht man sehr gut, dass sie durch die Abschrägung 8 der Adaptereinheit 10 ohne Probleme trotz angebrachter Adaptereinheit 10 geneigt werden kann, zumindest wenn der Kran 7 samt dessen Geräteträger 20 abgekoppelt wurde, z.B. nach einem erfindungsgemäßen Abkoppelverfahren.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit", "Einrichtung", o.ä. nicht aus, dass diese auch aus mehreren, gegebenenfalls auch räumlich getrennten, Untereinheiten bestehen können.

### Bezugszeichenliste

- 1: System
- 2: Fahrzeug / Lastkraftwagen
- 3: Fahrzeugrahmen
- 4: Anhängerkupplung
- 5: Stoßstange
- 6: Versteifung
- 7: Arbeitsgerät / Kran
- 8: Abschrägung
- 9: Ladefläche
- 10: Adaptereinheit
- 11: erste Kopplungsstruktur
- 12: erster Anschlag
- 13: zweiter Anschlag
- 14: Ausnehmung
- 15: Positionierungshilfe
- 16: Adapterplatte
- 20: Geräteträger
- 21: zweite Kopplungsstruktur
- 22: Verriegelungselement
- 23: Bewegungseinheit
- 24: Halterungselement / Drehbolzen
- 30: Lagervorrichtung / Hubwagen
- 31: Aufnahme / Befestigungspunkt
- 32: Hubelement / Hubeinrichtung
- 33: Rolle

## Patentansprüche

1. System (1) zur Kopplung eines Arbeitsgeräts (7) an einem Fahrzeug (2) das System (1) umfassend eine Adaptereinheit (10), ausgelegt zur festen Anbringung am Heck und/oder an der Front des Fahrzeugs (2) und einen Geräteträger (20) ausgelegt zum Fixieren und Tragen des Arbeitsgeräts (7),
- wobei das System (1) so ausgeformt ist, dass der Geräteträger (20) durch Herankippen um eine Drehachse im unteren Bereich der Adaptereinheit (10) in eine Koppelposition mit der Adaptereinheit (10) gebracht werden kann und
- wobei die Adaptereinheit (10) eine erste Kopplungsstruktur (11) und der Geräteträger (20) eine zweite Kopplungsstruktur (21) aufweisen, wobei diese Kopplungsstrukturen (11, 21) so ausgeformt sind, dass sie in der Koppelposition von Adaptereinheit (10) und Geräteträger (20) dermaßen ineinander greifen, dass durch einen formschlüssigen ersten Anschlag (12) der Kopplungsstrukturen (11, 21) aneinander zumindest eine relative vertikale Verschiebung des Geräteträgers (20) zur Adaptereinheit (10) nach oben blockiert wird und
- wobei das System (1) einen Verriegelungsmechanismus (22, 23) mit beweglichen Verriegelungselementen (22) aufweist, welche in eine Schließposition und in eine Entnahmeposition bewegt werden können und in der Schließposition den Geräteträger (20) an der Adaptereinheit (10) fixieren und in der Entnahmeposition von der Adaptereinheit (10) freigeben.

2. System nach Anspruch 1, wobei die Kopplungsstrukturen (11, 21) in der Koppelposition von Adaptereinheit (10) und Geräteträger (20) zusätzlich so ineinander greifen, dass in der Koppelposition durch einen formschlüssigen zweiten Anschlag (13) der Kopplungsstrukturen (11, 21) aneinander eine relative vertikale Verschiebung des Geräteträgers (20) zur Adaptereinheit (10) nach unten blockiert wird,
wobei die Kopplungsstrukturen (11, 21) bevorzugt so geformt sind, dass eine der Kopplungsstrukturen (11, 21) eine Ausbuchtung aufweist, die in eine passende Einbuchtung der anderen Kopplungsstruktur (11, 21) eingreifen kann, so dass auf diese Weise in der Koppelposition die beiden formschlüssigen Anschläge (12, 13) der Kopplungsstrukturen (11, 21) aneinander hergestellt werden,
und wobei bevorzugt ein Verriegelungselement (22) des Verriegelungsmechanismus (22, 23) in der Koppelposition in einem Bereich zwischen dem ersten Anschlag (12) und den zweiten Anschlag (13) blockierend eingreift, insbesondere in eine Ausnehmung in der Ausbuchtung und/oder wobei ein Verriegelungselement (22) einen Druck auf mindestens einen der Anschläge (12, 13) ausübt und Ausbuchtung und Einbuchtung insbesondere einander entsprechend keilförmig oder konisch geformt sind.

3. System nach einem der vorangehenden Ansprüche, wobei die Adaptereinheit (10) zwei erste Kopplungsstrukturen (11) aufweist, die rechts und links zu einer mittleren vertikalen Fahrzeugebene, insbesondere spiegelbildlich zu dieser, angeordnet sind und bevorzugt gleichartig geformt sind, und wobei der Geräteträger (20) zwei, bevorzugt parallel formschlüssig wirkende, zweite Kopplungsstrukturen (21) aufweist, die so geformt und angeordnet sind, dass sie in der Koppelposition in die beiden ersten Kopplungsstrukturen (11) eingreifen.

4. System nach einem der vorangehenden Ansprüche, wobei die Adaptereinheit (10) an einem Fahrzeugrahmen (3) angebracht ist, welcher mit einer, insbesondere kreuzförmigen, Versteifung gegen Scherkräfte und/oder Torsionskräfte versehen ist.

5. System nach einem der vorangehenden Ansprüche, wobei der Verriegelungsmechanismus (22, 23) eine Bewegungseinheit (23) zur automatischen Bewegung der Verriegelungselemente (22) in die Schließposition und die Entnahmeposition umfasst, insbesondere eine Hydraulik, wobei die Bewegungseinheit (23) bevorzugt
- an dem Geräteträger (20) angeordnet ist und die Verriegelungselemente (22) in der Schließposition in Ausnehmungen (14) in der Adaptereinheit (10) eingreifen oder
- an der Adaptereinheit (10) angeordnet ist und die Verriegelungselemente (22) in der Schließposition in Ausnehmungen in dem Geräteträger (20) eingreifen,
wobei sich die Ausnehmungen (14) insbesondere in einer Kopplungsstruktur (11, 21) befinden,
wobei bevorzugt in eine Kopplungsstruktur (11, 21) in der Schließposition zwei Verriegelungselemente (22) eingreifen, eines im oberen Bereich der Kopplungsstruktur (11, 21) und eines im unteren Bereich.

6. System nach einem der vorangehenden Ansprüche, wobei mindestens eine erste Kopplungsstruktur (11) der Adaptereinheit (10) an ihrer Unterseite eine nach unten offene Positionierungshilfe (15) aufweist und der Geräteträger (20) einen Drehbolzen (24) aufweist, der so angeordnet ist, dass er zum Erreichen der Koppelposition von unten in die Positionierungshilfe (15) hinein bewegt werden muss,
bevorzugt wobei der in die Positionierungshilfe (15) eingeschobene Drehbolzen (24) eine physische Drehachse zum Herankippen des Geräteträgers an die Adaptereinheit (10) bildet,
und oder
wobei mindestens eine zweite Kopplungsstruktur (21) an dem Geräteträger (20) an ihrer Unterseite ein Halterungselement (24) aufweist, das bevorzugt mit einer Aufnahme einer Lagervorrichtung (30) nach einem der Ansprüche 7 bis 10 lösbar verbunden werden kann, wobei dieses Halterungselement (24) bevorzugt ein Drehbolzen (24) oder eine Verlängerung eines Drehbolzens (24) nach Anspruch 6 ist.

7. System (1) nach einem der vorangehenden Ansprüche, umfassend eine bewegliche Lagervorrichtung (30), insbesondere einen beweglichen Hubwagen (30), die mit einer Aufnahme (31) für den Geräteträger (20) ausgestattet ist, bevorzugt einer 3-Punkt-Halterung, und die bevorzugt zusätzlich eine Hubeinrichtung (32) umfasst, die dazu ausgestaltet ist, die Aufnahme (31) bezüglich ihrer Höhe und/oder ihrer Orientierung zu verändern.

8. System nach Anspruch 7, wobei die Lagervorrichtung (30) zur Anordnung des Geräteträgers (20) an einer Adaptereinheit (10) eines Fahrzeugs (2) ausgelegt ist und dazu ausgestaltet ist, den Geräteträger (20) zusammen mit einem an diesem befestigen Arbeitsgerät (7) lösbar fixiert an der Aufnahme (31) zu halten, und bevorzugt die Aufnahme (31) bezüglich ihrer Höhe und/oder Neigung zu bewegen,
wobei die Lagervorrichtung (30) bevorzugt Rollen (33) zum Bewegen der Lagervorrichtung (30) über eine Bodenfläche umfasst.

9. System nach Anspruch 8, wobei die Aufnahme (31) der Lagervorrichtung (30) eine Mehrpunkt-Halterung, insbesondere eine 3-Punkt-Halterung, aufweist, die dazu ausgelegt ist, einen Geräteträger mittels Befestigungspunkten (31) zu halten,
bevorzugt wobei mindestens zwei horizontal beabstandete Befestigungspunkte (31) dazu ausgelegt sind, einen Geräteträger (20) an seiner bestimmungsgemäß dem Fahrzeug (2) zugewandten Seite zu halten und mindestens ein Befestigungspunkt (31) dazu ausgelegt ist den Geräteträger (20) an dessen gegenüberliegender Seite zu halten, insbesondere an einer am Geräteträger (20) angebrachten Anhängerkupplung (4).

10. System nach Anspruch 8 oder 9, wobei die Lagervorrichtung (30) als Hubwagen (30) umfassend eine Hubeinrichtung (32) ausgestaltet ist, die dazu ausgestaltet ist, die Aufnahme (31) mittels Hubelementen (32) vertikal zu heben und senken und insbesondere zusätzlich so zu kippen, dass ein auf der Aufnahme (31) angebrachter Geräteträger (20) nach hinten und vorne verkippt werden kann,
wobei die Verkippung bevorzugt durch eine unabhängige Höhenverstellung von Befestigungspunkten (31) einer Mehrpunkt-Halterung mittels unabhängig steuerbaren Hubelementen (32) erreicht wird.

11. System nach Anspruch 10, wobei die Hubeinrichtung (32) hydraulisch oder pneumatisch bewegt werden kann und besonders bevorzugt mit scherenförmigen Hubelementen (32) ausgestattet ist.

12. Adaptereinheit (10) ausgelegt zur Verwendung in einem System (1) nach einem der Ansprüche 1 bis 11, wobei die Adaptereinheit (10) bevorzugt an einem Fahrzeugrahmen (3) angebracht ist, welcher mit einer, insbesondere kreuzförmigen, Versteifung (6) gegen Scherkräfte und/oder Torsionskräfte versehen ist,
wobei die Adaptereinheit (10) eine erste Kopplungsstruktur (11) aufweist, welche ausgeformt ist, dass sie in der Koppelposition von Adaptereinheit (10) und Geräteträger (20) des Systems (1) dermaßen in eine Kopplungsstruktur (21) des Geräteträgers greift, dass durch einen formschlüssigen ersten Anschlag (12) der Kopplungsstrukturen (11, 21) aneinander zumindest eine relative vertikale Verschiebung des Geräteträgers (20) zur Adaptereinheit (10) nach oben blockiert wird und
wobei die Adaptereinheit (10) so ausgeformt ist, dass der Geräteträger (20) durch Herankippen um eine Drehachse im unteren Bereich der Adaptereinheit (10) in eine Koppelposition mit der Adaptereinheit (10) gebracht werden kann.

13. Fahrzeug (2), insbesondere ein Lastkraftwagen oder ein Unimog, umfassend eine Adaptereinheit (10) nach Anspruch 12, die an dem Fahrzeug (2) fest montiert ist, insbesondere an dessen Fahrzeugrahmen (3), und wobei das Fahrzeug (2) bevorzugt zusätzlich eine neigbare Ladefläche (9) umfasst.

14. Ankoppelverfahren zum Ankoppeln eines Geräteträgers (20) eines Systems (1) nach einem der Ansprüche 1 bis 11 an einem Fahrzeug (2) umfassend die Schritte:
- Bereitstellen eines Fahrzeugs (2) nach Anspruch 13,
- Positionieren des Geräteträgers (20) im Bereich der Adaptereinheit (10), insbesondere mittels einer beweglichen Lagervorrichtung (30) nach einem der Ansprüche 8 bis 10, wobei bevorzugt die Höhe des Geräteträgers (20) mittels einer Hubeinrichtung (32) der Lagervorrichtung (30) eingestellt wird,
- Herankippen des Geräteträgers (20) um eine Drehachse im unteren Bereich der Adaptereinheit (10) in eine Koppelposition mit der Adaptereinheit (10),
- Fixieren des Geräteträgers (20) mittels des Verriegelungsmechanismus (22, 23), wobei mindestens ein Verriegelungselement (22) in eine Schließposition bewegt wird.

15. Abkoppelverfahren zum Abkoppeln eines Geräteträgers (20) eines Systems (1) nach einem der Ansprüche 1 bis 11 von einem Fahrzeug (2), umfassend die Schritte:
- Positionieren einer Lagervorrichtung (30), bevorzugt nach einem der Ansprüche 8 bis 10, insbesondere eines Hubwagens (30), unter dem Geräteträger (20),
- Freigeben des Geräteträgers (20) mittels des Verriegelungsmechanismus (22, 23), wobei mindestens ein Verriegelungselement (22) in eine Entnahmeposition bewegt wird,
- Auskippen des Geräteträgers (20) um eine Drehachse im unteren Bereich der Adaptereinheit (10) aus einer Koppelposition mit der Adaptereinheit (10), bevorzugt mittels einer Hubeinrichtung (32) der Lagervorrichtung (30).

## Claims

1. A system (1) for coupling a work implement (7) to a vehicle (2), the system (1) comprising an adapter unit (10) designed to be securely mounted at the rear and/or front of the vehicle (2) and an equipment carrier (20) designed to secure and support the work implement (7),
- wherein the system (1) is configured such that the equipment carrier (20) can be brought into a coupling position with the adapter unit (10) by tilting it about a pivot axis in the lower region of the adapter unit (10), and
- wherein the adapter unit (10) comprises a first coupling structure (11) and the equipment carrier (20) comprises a second coupling structure (21), wherein these coupling structures (11, 21) are shaped such that, in the coupling position of the adapter unit (10) and the equipment carrier (20), they interlock to such an extent that a form-fitting first stop (12) of the coupling structures (11, 21) blocks at least a relative vertical upward displacement of the equipment carrier (20) relative to the adapter unit (10), and
- wherein the system (1) comprises a locking mechanism (22, 23) with movable locking elements (22) which can be moved into a locking position and a release position, and which, in the locking position, secure the equipment carrier (20) to the adapter unit (10) and, in the release position, release it from the adapter unit (10).

2. System according to claim 1, wherein, in the coupling position of the adapter unit (10) and the equipment carrier (20), the coupling structures (11, 21) additionally interlock in such a way that, in the coupling position, due to a form-fitting second stop (13) of the coupling structures (11, 21) relative to one another, a relative vertical downward displacement of the equipment carrier (20) relative to the adapter unit (10) is blocked, wherein the coupling structures (11, 21) are preferably shaped such that one of the coupling structures (11, 21) has a protrusion which can engage with a corresponding recess in the other coupling structure (11, 21), so that in this way, in the coupling position, the two form-fitting stops (12, 13) of the coupling structures (11, 21) are established against one another,
and wherein, preferably, a locking element (22) of the locking mechanism (22, 23) engages in a locking manner in the coupling position within a region between the first stop (12) and the second stop (13), in particular in a recess in the protrusion, and/or wherein a locking element (22) exerts pressure on at least one of the stops (12, 13), and the protrusion and recess are, in particular, shaped in a wedge-like or conical manner corresponding to one another.

3. A system according to any one of the preceding claims, wherein the adapter unit (10) comprises two first coupling structures (11) which are arranged to the right and left of a central vertical vehicle plane, in particular symmetrically with respect to it, and are preferably of similar shape, and wherein the equipment carrier (20) comprises two second coupling structures (21), preferably acting in a parallel form-fitting manner, which are shaped and arranged such that, in the coupling position they engage with the two first coupling structures (11).

4. A system according to one of the preceding claims, wherein the adapter unit (10) is mounted on a vehicle frame (3) which is provided with a stiffener, in particular a cross-shaped one, against shear forces and/or torsional forces.

5. A system according to any one of the preceding claims, wherein the locking mechanism (22, 23) comprises a movement unit (23) for automatically moving the locking elements (22) into the closed position and the release position, in particular a hydraulic system, wherein the movement unit (23) preferably
- is arranged on the equipment carrier (20) and the locking elements (22) engage in recesses (14) in the adapter unit (10) in the closed position, or
- is arranged on the adapter unit (10) and the locking elements (22) engage in recesses in the equipment carrier (20) in the closed position,
wherein the recesses (14) are located in particular in a coupling structure (11, 21), whereby, preferably, two locking elements (22) engage with a coupling structure (11, 21) in the closed position, one in the upper region of the coupling structure (11, 21) and one in the lower region.

6. A system according to one of the preceding claims, wherein at least a first coupling structure (11) of the adapter unit (10) has at its underside a positioning aid (15) open at the bottom, and the equipment carrier (20) has a pivot pin (24) which is arranged such that, to reach the coupling position, it must be moved into the positioning aid (15) from below,
preferably wherein the pivot pin (24) inserted into the positioning aid (15) forms a physical axis of rotation for tilting the equipment carrier towards the adapter unit (10),
and/or
wherein at least a second coupling structure (21) on the equipment carrier (20) comprises, on its underside, a mounting element (24) which can preferably be detachably connected to a mounting of a storage device (30) according to any one of claims 7 to 10,
wherein this mounting element (24) is preferably a pivot pin (24) or an extension of a pivot pin (24) according to claim 6.

7. System (1) according to any one of the preceding claims, comprising a movable storage device (30), in particular a movable lift truck (30), which is equipped with a mounting (31) for the equipment carrier (20), preferably a 3-point mounting, and which preferably additionally comprises a lifting device (32) designed to alter the height and/or orientation of the mounting (31).

8. System according to claim 7, wherein the storage device (30) is designed to mount the equipment carrier (20) on an adapter unit (10) of a vehicle (2) and is configured to hold the equipment carrier (20), together with a work implement (7) attached thereto at the mounting (31) in a releasably fixed manner, and preferably to move the mounting (31) in terms of its height and/or inclination,
wherein the storage device (30) preferably comprises rollers (33) for moving the storage device (30) across a floor surface.

9. System according to claim 8, wherein the mounting (31) of the storage device (30) comprises a multi-point mounting, in particular a 3-point mounting, which is designed to hold an equipment carrier by means of mounting points (31),
preferably wherein at least two horizontally spaced mounting points (31) are designed to hold an equipment carrier (20) on its side intended to face the vehicle (2), and at least one mounting point (31) is designed to hold the equipment carrier (20) on its opposite side, in particular to a trailer hitch (4) attached to the equipment carrier (20).

10. A system according to claim 8 or 9, wherein the storage device (30) is designed as a lift truck (30) comprising a lifting device (32) which is designed to raise and lower the mounting (31) vertically by means of lifting elements (32) and, in particular, additionally tilt it in such a way that an equipment carrier (20) mounted on the mounting (31) can be tilted backwards and forwards,
wherein the tilting is preferably achieved by independent height adjustment of mounting points (31) of a multi-point mounting by means of independently controllable lifting elements (32).

11. System according to claim 10, wherein the lifting device (32) can be moved hydraulically or pneumatically and is particularly preferably equipped with scissor-shaped lifting elements (32).

12. An adapter unit (10) designed for use in a system (1) according to any one of claims 1 to 11, wherein the adapter unit (10) is preferably mounted on a vehicle frame (3) which is provided with a stiffener (6), in particular a cross-shaped one, against shear forces and/or torsional forces,
wherein the adapter unit (10) comprises a first coupling structure (11) which is shaped such that, in the coupling position of the adapter unit (10) and the equipment carrier (20) of the system (1), it engages with a coupling structure (21) of the equipment carrier in such a way that, by means of a form-fitting first stop (12) of the coupling structures (11, 21) blocks at least a relative vertical upward displacement of the equipment carrier (20) relative to the adapter unit (10), and
wherein the adapter unit (10) is shaped such that the equipment carrier (20) can be brought into a coupling position with the adapter unit (10) by tilting it towards the adapter unit (10) about a rotational axis in the lower region of the adapter unit (10).

13. A vehicle (2), in particular a truck or a Unimog, comprising an adapter unit (10) according to claim 12, which is fixedly mounted on the vehicle (2), in particular on its vehicle frame (3), and wherein the vehicle (2) preferably additionally comprises a tiltable loading platform (9).

14. A coupling method for coupling an equipment carrier (20) of a system (1) according to any one of claims 1 to 11 to a vehicle (2), comprising the steps:
- providing a vehicle (2) according to claim 13,
- Positioning the equipment carrier (20) in the vicinity of the adapter unit (10), in particular by means of a movable storage device (30) according to one of claims 8 to 10, wherein the height of the equipment carrier (20) is preferably adjusted by means of a lifting device (32) of the storage device (30),
- Tilting the equipment carrier (20) about an axis of rotation in the lower region of the adapter unit (10) into a coupling position with the adapter unit (10),
- Securing the equipment carrier (20) by means of the locking mechanism (22, 23), wherein at least one locking element (22) is moved into a closed position.

15. A decoupling method for decoupling an equipment carrier (20) of a system (1) according to any one of claims 1 to 11 from a vehicle (2), comprising the steps of:
- positioning a storage device (30), preferably according to one of claims 8 to 10, in particular a lift truck (30), beneath the equipment carrier (20),
- releasing the equipment carrier (20) by means of the locking mechanism (22, 23), wherein at least one locking element (22) is moved into a removal position,
- Tilting the equipment carrier (20) about a rotational axis in the lower region of the adapter unit (10) out of a coupling position with the adapter unit (10), preferably by means of a lifting device (32) of the storage device (30).

## Revendications

1. Système (1) de couplage d'un appareil de travail (7) à un véhicule (2), le système (1) comprenant une unité d'adaptation (10), conçue pour le montage fixe à l'arrière et/ou à l'avant du véhicule (2) et un support d'appareil (20) conçu pour fixer et supporter l'appareil de travail (7),
- sachant que le système (1) est formé de telle manière que le support d'appareil (20) peut être placé dans une position de couplage avec l'unité d'adaptation (10) par basculement autour d'un axe de rotation dans la zone inférieure de l'unité d'adaptation (10) et
- sachant que l'unité d'adaptation (10) comporte une première structure de couplage (11) et le support d'appareil (20) une deuxième structure de couplage (21), sachant que ces structures de couplage (11, 21) sont formées de telle manière qu'elles viennent en prise l'une dans l'autre dans la position de couplage de l'unité d'adaptation (10) et du support d'appareil (20) de telle manière que par une première butée (12) par conformité de forme des structures de couplage (11, 21) l'une sur l'autre au moins un déplacement vertical relatif du support d'appareil (20) vers l'unité d'adaptation (10) est bloqué vers le haut et
- sachant que le système (1) comporte un mécanisme de verrouillage (22, 23) avec des éléments de verrouillage mobiles (22), lesquels peuvent être déplacés dans une position de fermeture et dans une position d'enlèvement et fixer le support d'appareil (20) sur l'unité d'adaptation (10) dans la position de fermeture et le libérer de l'unité d'adaptation (10) dans la position d'enlèvement.

2. Système selon la revendication 1, sachant que les structures de couplage (11, 21) dans la position de couplage de l'unité d'adaptation (10) et du support d'appareil (20) viennent en plus en prise l'une dans l'autre de telle manière que dans la position de couplage, un déplacement vertical relatif du support d'appareil (20) vers l'unité d'adaptation (10) est bloqué vers le bas par une deuxième butée (13) par conformité de forme des structures de couplage (11, 21) l'une sur l'autre,
sachant que les structures de couplage (11, 21) sont de préférence formées de telle manière qu'une des structures de couplage (11, 21) comporte une convexité, qui peut venir en prise dans une concavité adaptée de l'autre structure de couplage (11, 21) de telle sorte que de cette manière dans la position de couplage, les deux butées (12, 13) par conformité de forme des structures de couplage (11, 21) sont réalisées l'une sur l'autre,
et sachant de préférence qu'un élément de verrouillage (22) du mécanisme de verrouillage (22, 23) vient en prise de façon bloquante dans la position de couplage dans un secteur situé entre la première butée (12) et la deuxième butée (13), en particulier dans un évidement dans la convexité et/ou sachant qu'un élément de verrouillage (22) exerce une pression sur au moins une des butées (12, 13) et qu'une cavité et une concavité sont formées en particulier l'une dans l'autre de façon correspondante en forme de coin ou de cône.

3. Système selon l'une quelconque des revendications précédentes , sachant que l'unité d'adaptation (10) comporte deux premières structures de couplage (11), qui sont disposées à droite et à gauche d'un plan de véhicule central vertical, en particulier de façon symétrique, à celui-ci et sont formées de préférence de façon identique et sachant que le support d'appareil (20) comporte deux structures de couplage (21), agissant de préférence parallèlement par conformité de forme, qui sont formées et disposées de telle manière qu'elles viennent en prise dans la position de couplage dans les deux premières structures de couplage (11).

4. Système selon l'une quelconque des revendications précédentes, sachant que l'unité d'adaptation (10) est montée sur un châssis de véhicule (3), lequel est doté d'un système de renfort, en particulier en forme de croix, contre les forces de cisaillement et/ou les forces de torsion.

5. Système selon l'une quelconque des revendications précédentes, sachant que le mécanisme de verrouillage (22, 23) comprend une unité de déplacement (23) pour le déplacement automatique des éléments de verrouillage (22) dans la position de fermeture et la position d'enlèvement, en particulier un système hydraulique, sachant que l'unité de déplacement (23)
- est de préférence disposée sur le support d'appareil (20) et les éléments de verrouillage (22) viennent en prise dans la position de fermeture dans des évidements (14) dans l'unité d'adaptation (10) ou
- est disposée sur l'unité d'adaptation (10) et les éléments de verrouillage (22) viennent en prise dans la position de fermeture dans des évidements dans le support d'appareil (20),
sachant que les évidements (14) se trouvent en particulier dans une structure de couplage (11, 21),
sachant de préférence que deux éléments de verrouillage (22) dans une structure de couplage (11, 21) viennent en prise dans la position de fermeture, un dans le secteur supérieur de la structure de couplage (11, 21) et un dans le secteur inférieur.

6. Système selon l'une quelconque des revendications précédentes, sachant qu'au moins une première structure de couplage (11) de l'unité d'adaptation (10) comporte sur son côté inférieur une assistance de positionnement (15) ouverte vers le bas et le support d'appareil (20) comporte un pivot (24), qui est disposé de telle manière qu'il doit être déplacé du bas dans l'assistance de positionnement (15) pour obtenir la position de couplage,
sachant de préférence que le pivot (24) inséré dans l'assistance de positionnement (15) forme un axe de rotation physique pour basculer le support d'appareil sur l'unité d'adaptation (10),
et ou
sachant au moins qu'une deuxième structure de couplage (21) sur le support d'appareil (20) comporte sur son côté inférieur un élément de maintien (24), qui peut être relié de façon amovible de préférence à une réception d'un dispositif d'entreposage (30), selon l'une quelconque des revendications 7 à 10,
sachant que cet élément de maintien (24) est de préférence un pivot (24) ou un prolongement d'un pivot (24) selon la revendication 6.

7. Système (1) selon l'une quelconque des revendications précédentes, comprenant un dispositif d'entreposage mobile (30), en particulier un chariot élévateur mobile (30), qui est équipé d'une réception (31) pour le support d'appareil (20), de préférence à une fixation à 3 points et qui comprend de préférence en plus un système de levage (32), qui est configuré à cet effet pour modifier la réception (31) concernant sa hauteur et/ou son orientation.

8. Système selon la revendication 7, sachant que le dispositif d'entreposage (30) est conçu pour la mise en place du support d'appareil s (20) sur une unité d'adaptation (10) d'un véhicule (2) et est structuré à cet effet pour maintenir de façon amovible fixé à la réception (31) le support d'appareil (20) ensemble avec un appareil de travail (7), et déplacer de préférence la réception (31) concernant sa hauteur et/ou son inclinaison, sachant que le dispositif d'entreposage (30) comprend de préférence des roulettes (33) pour déplacer le dispositif d'entreposage (30) sur une surface de sol.

9. Système selon la revendication 8, sachant que la réception (31) du dispositif d'entreposage (30) comporte une fixation à points multiples, en particulier une fixation à 3 points, qui est conçue à cet effet pour maintenir un support d'appareil au moyen de points de fixation (31),
sachant de préférence qu'au moins deux points de fixation (31) horizontalement distants sont conçus à cet effet pour maintenir un support d'appareil (20) sur son côté tourné conformément vers le véhicule (2) et au moins un point de fixation (31) est conçu à cet effet pour maintenir le support d'appareil (20) sur le côté opposé à celui-ci, en particulier sur un attelage de remorque (4) monté sur le support d'appareil (20).

10. Système selon la revendication 8 ou 9, sachant que le dispositif d'entreposage (30) est configuré sous la forme d'un chariot élévateur (30) comprenant un système de levage (32), qui est configuré à cet effet pour lever et baisser verticalement et basculer en particulier en plus la réception (31) au moyen de moyens de levage (32) de telle manière qu'un support d'appareil (20) monté sur la réception (31) puisse être basculé vers l'arrière et vers l'avant,
sachant que le basculement est obtenu de préférence par un réglage en hauteur indépendant des points de fixation (31) d'une fixation à points multiples indépendamment d'éléments de levage (32) pouvant être commandés.

11. Système selon la revendication 10, sachant que le système de levage (32) peut être déplacé de façon hydraulique ou pneumatique et est en particulier équipé de préférence avec des éléments de levage en forme de ciseaux (32).

12. Unité d'adaptation (10) conçue pour l'utilisation dans un système (1) selon l'une quelconque des revendications 1 à 11, sachant que l'unité d'adaptation (10) est montée de préférence sur un châssis de véhicule (3), lequel est doté en particulier d'un renfort en forme de croix (6) contre les forces de cisaillement et/ou les forces de torsion,
sachant que l'unité d'adaptation (10) comporte une première structure de couplage (11), laquelle est formée de telle manière qu'elle vient en prise dans la position de couplage de l'unité d'adaptation (10) et du support d'appareil (20) du système (1) dans une structure de couplage (21) du support d'appareil de telle sorte que par une première butée (12) par conformité de forme des structures de couplage (11, 21) l'une sur l'autre, au moins un déplacement vertical relatif du support d'appareil (20) vers l'unité d'adaptation (10) est bloqué vers le haut, et
sachant que l'unité d'adaptation (10) est formée de telle manière que le support d'appareil (20) peut être placé dans une position de couplage avec l'unité d'adaptation (10) par basculement autour d'un axe de rotation dans le secteur inférieur de l'unité d'adaptation (10).

13. Véhicule (2), en particulier un camion ou un Unimog, comprenant une unité d'adaptation (10) selon la revendication 12, qui est montée fixement sur le véhicule (2), en particulier sur le châssis de véhicule (3) de celui-ci, et sachant que le véhicule (2) comprend de préférence en plus une surface de chargement inclinable (9).

14. Procédé de couplage pour coupler un support d'appareil (20) d'un système (1) selon l'une quelconque des revendications 1 à 11 à un véhicule (2) comprenant les étapes de :
- préparation d'un véhicule (2) selon la revendication 13,
- positionnement du support d'appareil (20) dans le secteur de l'unité d'adaptation (10), en particulier au moyen d'un dispositif d'entreposage mobile (30) selon l'une quelconque des revendications 8 bis 10, sachant de préférence que la hauteur du support d'appareil (20) est réglée au moyen d'un système de levage (32) du dispositif d'entreposage (30),
- basculement du support d'appareil (20) autour d'un axe de rotation dans le secteur inférieur de l'unité d'adaptation (10) dans une position de couplage avec l'unité d'adaptation (10),
- fixation du support d'appareil (20) au moyen du mécanisme de verrouillage (22, 23), sachant qu'au moins un élément de verrouillage (22) est déplacé dans une position de fermeture.

15. Procédé de découplage pour découpler un support d'appareil (20) d'un système (1) selon l'une quelconque des revendications 1 à 11 d'un véhicule (2), comprenant les étapes de:
- positionnement d'un dispositif d'entreposage (30), de préférence selon l'une quelconque des revendications 8 à 10, en particulier d'un chariot élévateur (30) sous le support d'appareil (20),
- libération du support d'appareil (20) au moyen du mécanisme de verrouillage (22, 23), sachant qu'au moins un élément de verrouillage (22) est déplacé dans une position d'enlèvement,
- basculement du support d'appareil (20) autour d'un axe de rotation dans le secteur inférieur de l'unité d'adaptation (10) d'une position de couplage avec l'unité d'adaptation (10), de préférence au moyen d'un dispositif de levage (32) du dispositif d'entreposage (30).
